# EUROPEAN PATENT APPLICATION

(11) **EP 1 939 671 A2**
(43) Date of publication of application: **02.07.2008**
(21) Application number: 07024475.1
(22) Date of filing: 18.12.2007
(51) Int. Cl.: G02F 1/1333, C03B 33/033

(54) **Mother display panel for producing display panels with improved efficiency**

(30) Priority: 28.12.2006 KR 20060136448
(71) Applicant: Samsung Electronics Co., Ltd., Yeongtong-gu Suwon-city, Gyeonggi-do 442-742 (KR)
(72) Inventor: Han, Hye-rhee, Suwon-si Gyeonggi-do (KR); Jang, Kyoung-jun, Asan-si Chungcheongnam-do (KR); Kim, Jung-im, Nam-gu Pohang-si Gyeongsangbuk-do (KR); Kim, Jong-oh, Chungcheongnam-do (KR)
(74) Representative: Dr. Weitzel & Partner

(57) **Abstract**

A mother display panel that is capable of being divided into multiple display panels precisely and efficiently is presented. The mother display panel includes a plurality of cutting mark groups which is arranged in a matrix pattern to serve as a position reference for corners of the plurality of display panels. The respective cutting mark groups include unit cutting marks that are spaced from each other.

## Description

### BACKGROUND OF THE INVENTION

### Field of the Invention

The present invention relates to a mother display panel for manufacturing a display panel, and more particularly to a mother display panel that is divided into a plurality of display panels.

### Description of the Related Art

There are various types of display devices today. Among the different types of display devices, display devices employing a liquid crystal display (LCD) panel have developed rapidly recently, in pace with advancement in semiconductor technologies. LCD panels offer advantages such as thinness and light weight, among others.

A display device which employs an LCD panel is small and light, and consumes less power than many other types of display panels. Thus, it has drawn much attention as a prospective replacement for the currently mainstream cathode ray tubes (CRTs). Recently, display devices having LCD panels are provided not only in small-sized devices such as mobile phones, personal digital assistants (PDAs) and portable multimedia players (PMPs), but also medium and large-sized devices such as monitors and TVs. That is, the display device is now used in most information processing apparatuses that use a screen.

Generally, a flat display panel such as the LCD panel is manufactured as follows. First, a large mother display panel is manufactured. The mother display panel includes cutting marks formed at predetermined intervals to provide a visual guide for cutting the mother display panel into a plurality of display panels. Also, the cutting marks are used to inspect whether the plurality of display panels is cut into a predetermined size.

Recently, there has been a wide variety of customer demands with display panels. As a result, the overall size range of the display panel including a non-display region has increased, even in cases where the size of the display region of the display panels remain unchanged.

Thus, the mother display panel is divided into display panels having same-size display regions but different overall sizes.

A complication here is that the cutting marks which are formed on the conventional mother display panel are not suitable for dividing the panel into display panels of different sizes. Also, the cutting marks which are formed on the conventional mother display panel are not appropriate for inspecting whether the plurality of display panels having different sizes is cut into the predetermined size.

### SUMMARY OF THE INVENTION

Accordingly, it is an aspect of the present invention to provide a mother display panel for manufacturing display panels of different sizes more precisely and efficiently.

In one aspect, the invention is a mother display panel that is to be divided into a plurality of display panels. The mother display panel includes a plurality of cutting mark groups arranged in a matrix pattern to serve as a position reference for corners of the plurality of display panels. The respective cutting mark groups include unit cutting marks that are spaced apart from each other.

The display panels may be of different sizes.

The unit cutting marks may have an average width ranging from about 1 µm to about 100 µm. Further, the unit cutting marks may be spaced from each other by a distance ranging from about 1 µm to about 100 µm.

At least some of the unit cutting marks may have a symbol formed thereon to identify itself.

The mother display panel may also include an auxiliary cutting mark group which includes unit auxiliary cutting marks and is located at a predetermined position relative to the cutting mark groups. The plurality of unit auxiliary cutting marks may have a different shape than the unit cutting marks.

The auxiliary cutting mark group may be positioned adjacent to the cutting mark groups.

According to an aspect of the invention, the auxiliary cutting mark group may be spaced apart from the cutting mark groups by a distance ranging from about 1 µm to about 300 µm.

The cutting mark groups may be of the convex-type or the concave-type.

The mother display panel may also include a first mother substrate, a second mother substrate, and a plurality of thin film layers formed between the first and second mother substrates. The plurality of thin film layers may include a light blocking layer, and the cutting mark groups may be formed on the same layer as the light blocking layer using the same material as the light blocking layer.

The plurality of thin film layers may include gate wires, and the cutting mark groups may be formed on the same layer as the gate wires using the same material as the gate wires.

The plurality of thin film layers may include data wires, and the cutting mark groups may be formed on the same layer as the data wires using the same material as the data wires.

The plurality of thin film layers may include a semiconductor layer which includes amorphous silicon, and the cutting mark groups may be formed on the same layer as the semiconductor layer using the same material as the semiconductor layer.

The plurality of thin film layers may include a semiconductor layer that includes poly silicon, and the cutting mark groups may be formed on the same layer as the semiconductor layer using the same material as the semiconductor layer.

### BRIEF DESCRIPTION OF THE DRAWINGS

The above and/or other aspects and advantages of the present invention will become apparent and more readily appreciated from the following description of the embodiments, taken in conjunction with the accompanying drawings of which:
FIG. 1 is partial plan view of a mother display panel according to a first exemplary embodiment of the present invention;
FIG. 2 is an enlarged view of the cutting mark group in FIG. 1;
FIG. 3 is a partial sectional view of the mother display panel in FIG. 1;
FIG. 4 is an enlarged view of a cutting mark group which is used in a mother display panel according to a second exemplary embodiment of the present invention;
FIG. 5 is an enlarged view of a cutting mark group which is used in a mother display panel according to a third exemplary embodiment of the present invention;
FIG. 6 is an enlarged view of a cutting mark group which is used in a mother display panel according to a fourth exemplary embodiment of the present invention;
FIG. 7 is an enlarged view of a cutting mark group which is used in a mother display panel according to a fifth exemplary embodiment of the present invention;
FIG. 8 is a partial sectional view of a mother display panel according to a sixth exemplary embodiment of the present invention;
FIG. 9 is a partial sectional view of a mother display panel according to a seventh exemplary embodiment of the present invention;
FIG. 10 is a partial sectional view of a mother display panel according to an eighth exemplary embodiment of the present invention; and
FIG. 11 is a partial sectional view of a mother display panel according to a ninth exemplary embodiment of the present invention.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary.

In the interest of maintaining a clear focus on the present invention, descriptions of parts or processes that are not related to the invention are avoided.

Also, the thicknesses of layers and regions in the drawings are enlarged for clear illustration, and therefore not necessarily shown to scale.

The term "on" includes both the case where there is a layer, film, region or panel interposed between two layers and the case where the two layers are in direct contact with each other.

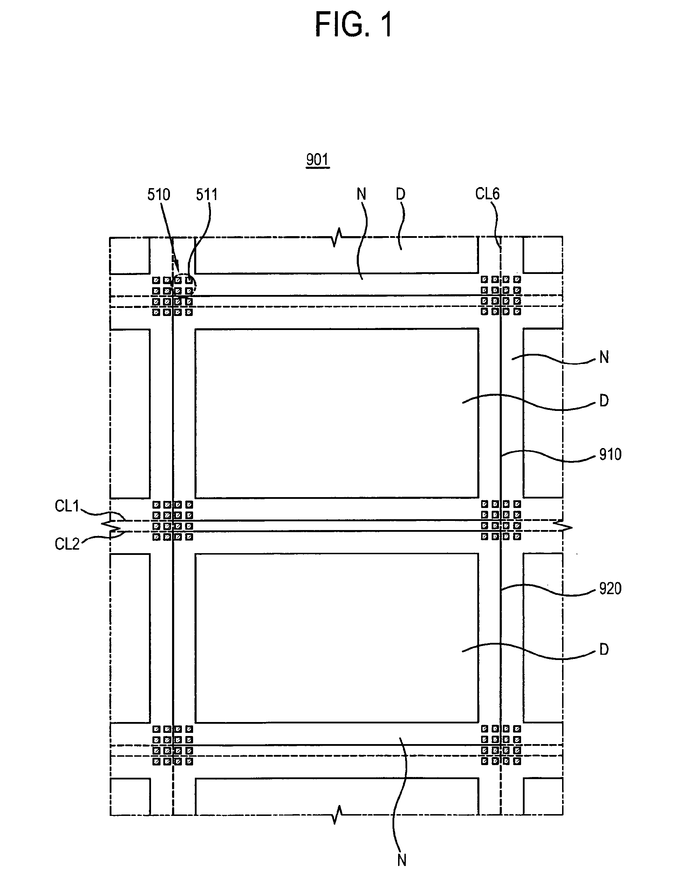

As shown in FIG. 1, a mother display panel 901 for manufacturing a display panel according to a first exemplary embodiment of the present invention includes a plurality of cutting mark groups 510. The mother display panel 901 is divided into a plurality of display panels 910 and 920.

The plurality of cutting mark groups 510 is formed in a matrix pattern, and serves as a position reference for the corners of the plurality of display panels 910 and 920 upon cutting. The respective cutting mark groups 510 include a plurality of unit cutting marks 511 which are spaced apart from each other.

The dotted lines in FIG. 1 show cutting lines CL1, CL2 and CL6 along which the mother display panel 901 is cut based on the cutting mark groups 510. The positions of the cutting lines CL1, CL2 and CL6 may be determined according to the desired sizes of the display panels 910 and 920, and based on the cutting mark groups 510.

A single cutting mark group 510 in FIG. 1 includes four unit cutting marks 511 arranged in a substantially rectangular configuration. However, this is not a limitation of the invention. For example, in other embodiments, a single cutting mark group 510 may include two, three or five unit cutting marks 511. Also, the respective unit cutting marks 511 may have a shape other than the rectangular shape shown in FIG. 1.

Each unit cutting mark 511 has an average width ranging from about 1 µm to 100 µm. Here, the average width refers to an average of the widths measured along different directions for a single unit cutting mark 511. That is, while the average width may be a diameter when the unit cutting marks 511 includes a circular arrangement, it may have to be calculated for other shapes and arrangements. The plurality of unit cutting marks 511 included in the single cutting mark group 510 is spaced apart from each other by an interval of about 1 µm to 100 µm.

Each of the display panels 910 and 920 which are cut out from the mother display panel 901 includes a display region D and a non-display region N. The cutting mark groups 510 are formed on the non-display region N. The display panels 910 and 920 are of two different sizes. The size of the display region D is substantially equal in the display panels 910 and 920 while the sizes of the non-display region N are different between the two display panels 910, 920, although this is not a limitation of the invention. In other embodiments, the size of the display region D may also be different.

As shown in FIG. 1, the mother display panel 901 is divided into a first display panel 910 and a second display panel 920 which are different in size. Here, the first display panel 910 is larger than the second display panel 920.

If the mother display panel 901 were to be divided into the first and second display panels 910 and 920, all the unit cutting marks 511 of the cutting mark groups 510 formed in the corners of the first display panel 910 would remain in the first display panel 910. Meanwhile, some of the unit cutting marks 511 of the cutting mark groups 510 formed in the corners of the second display panel 920 would be cut out. Some of the unit cutting marks 511 of the cutting mark groups 510 formed in the two or four corners of the second display panel 920 remain in the second display panel 920.

The mother display panel 901 may be precisely divided into various sizes by adjusting the number of unit cutting marks 511 to remain. The second display panel 920 may be more precisely and efficiently cut into a size different from that of the first display panel 910, using the unit cutting marks 511 of the cutting mark groups 510.

Thus, the mother display panel 901 is divided into the plurality of display panels 910 and 920 having at least two different sizes.

Also, a manufacturer may confirm whether the display panels 910 and 920 are cut into desired sizes based on the unit cutting marks 511 remaining in the corners of the divided display panels 910 and 920.

The size of the divided display panels 910 and 920 may be changed by adjusting the number and arrangement of the remaining unit cutting marks 511.

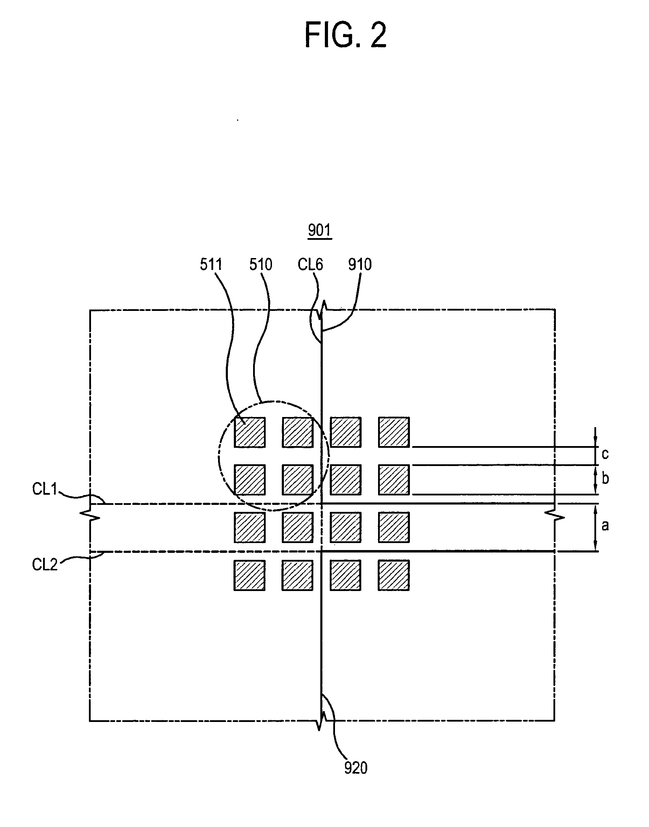

FIG. 2 illustrates the cutting mark group 510 which is formed in a corner of the second display panel 920. A solid line represents a second display panel 920 which is cut out of the mother display panel 901. For example, the unit cutting marks 511 may have an average width b of 20 µm, and are spaced from each other at an interval c of 5 µm. As shown therein, the length of the second display panel 920 is 25 µm smaller than that of the first display panel 910 based on the number and arrangement of the unit cutting marks 511 remaining in the corners of the second display panel 920. That is, the length difference between the first and second display panels 910 and 920 is 25 µm.

With such a configuration, the mother display panel 901 may be easily divided into the plurality of display panels 910 and 920 having different sizes, using the cutting mark groups 510 having the plurality of unit cutting marks 511.

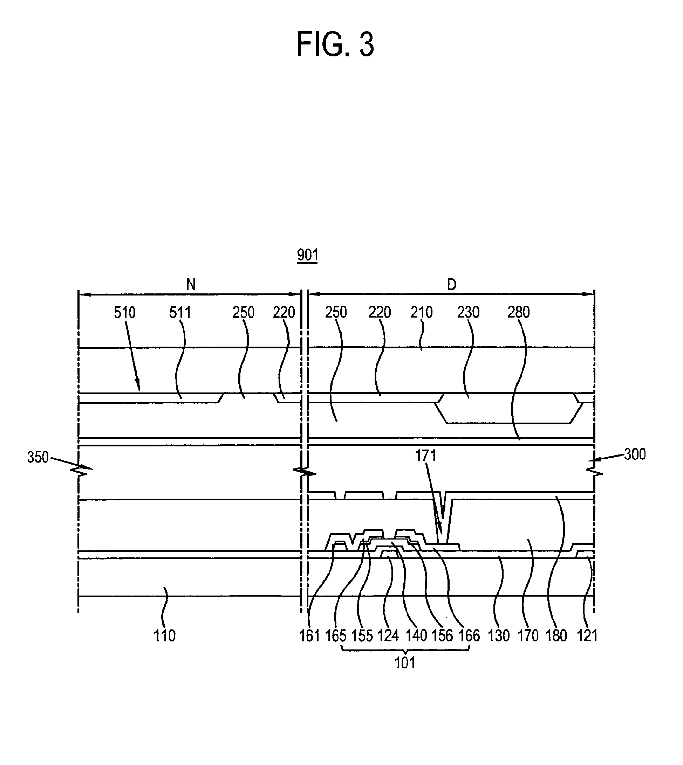

FIG. 3 is a partial sectional view of the mother display panel 901 according to the first exemplary embodiment of the present invention. FIG. 3 illustrates a section of the non-display region N having the cutting mark groups 510, and that of the display region D displaying an image, in the mother display panel 901.

As shown therein, the mother display panel 901 includes a first mother substrate 110, a second mother substrate 210 facing the first mother substrate 110, and a plurality of thin film layers formed between the first and second mother substrates 110 and 210. A liquid crystal layer 300 is disposed between the first and second mother substrates 110 and 210 in the display region D, although this is not a limitation of the invention. In some embodiments, the mother display panel 901 may not include the liquid crystal layer 300 depending on a manufacturing method. If the mother display panel 901 does not include the liquid crystal layer 300, the liquid crystal layer 300 is injected into the respective display panels 910 and 920 after dividing the mother display panel 901 into the plurality of display panels 910 and 920 (refer to FIG. 1). A sealant 350 is provided between the first and second mother substrates 110 and 210 in the non-display region N to contain the liquid crystals.

Hereinafter, the mother display panel 901 having the liquid crystal display panel 300 will be described.

First, the configuration of the mother display panel 901 in the display region D is as follows.

The first mother substrate 110 includes a transparent material such as glass, quartz, ceramic or plastic.

Gate wires 121 and 124 are formed on the first mother substrate 110. The gate wires 121 and 124 include a plurality of gate lines 121 and a plurality of gate electrodes 124 which is branched from the gate lines 121. The gate wires 121 and 124 may further include a plurality of first storage electrode lines (not shown).

The gate wires 121 and 124 may include a metal such as Al, Ag, Cr, Ti, Ta, Mo or an alloy thereof. FIG. 3 illustrates the gate wires 121 and 124 as a single layer. Alternatively, the gate wires 121 and 124 may include multiple layers having a first metal layer that has good physical and chemical properties, such as Cr, Mo, Ti, Ta or an alloy thereof, and a second metal layer that has a low specific resistance, such as Cr, Mo, Ti, Ta or an alloy thereof. In other embodiments, the gate wires 121 and 124 may include various metals or conductive materials and preferably have multiple layers that can be patterned by using one etching method.

A gate insulating layer 130 including silicon nitride (SiNx) is formed on the gate wires 121 and 124.

Data wires 161, 165 and 166 are formed on the gate insulating layer 130. The data wires 161, 165 and 166 include a plurality of data lines 161 crossing the gate lines 121, a plurality of source electrodes 165 branched from the data lines 161 and a plurality of drain electrodes 166 which is spaced apart from the source electrodes 165. The data wires 161, 165 and 166 may further include a plurality of second storage electrode lines that overlaps the first storage electrode lines (not shown).

The data wires 161, 165 and 166 may include a conductive material such as chrome, molybdenum, aluminum or an alloy thereof, like the gate wires 121 and 124. The data wires 161, 165 and 166 may be made of a single layer or multiple layers.

A semiconductor layer 140 is formed between the gate insulating layer 130 on the gate electrodes 124 and the source electrodes 165 and the drain electrodes 166. The semiconductor layer 140 includes amorphous silicon. Here, the gate electrodes 124, the source electrodes 165 and the drain electrodes 166 serve as three electrodes of a thin film transistor 101. The semiconductor layer 140 formed between the source electrodes 165 and the drain electrodes 166 is a channel region of the thin film transistor 101.

Ohmic contact members 155 and 156 are formed between the semiconductor layer 140 and the source electrodes 165, and also between the semiconductor layer 140 and the drain electrodes 166, to reduce the contact resistance between the sandwiching layers. The ohmic contact members 155 and 156 include silicide or amorphous silicon highly doped with an n-type dopant.

A passivation layer 170 is formed on the data wires 161, 165 and 166. The passivation layer 170 includes an insulating material with a low permittivity such as a-Si:C:O and a-Si:O:F formed by a plasma enhanced chemical vapor deposition (PECVD) or an inorganic insulating material such as silicon nitride or silicon oxide.

An organic layer may be formed on the passivation layer 170. The organic layer provides a planar surface and includes a photoresist material.

A plurality of pixel electrodes 180 is formed on the passivation layer 170. The pixel electrodes 180 include a transparent conductive material such as indium tin oxide (ITO) or indium zinc oxide (IZO), or an opaque conductive material such as aluminum having good light reflection.

The passivation layer 170 includes a plurality of contact holes 171 that extends to a part of the drain electrodes 166. The pixel electrodes 180 and the drain electrodes 166 are electrically connected with each other through the contact holes 171.

The second mother substrate 210 also includes a transparent material such as glass, quartz, ceramic or plastic, like the first mother substrate 110.

A light blocking layer 220 is formed on the second mother substrate 210. The light blocking layer 220 includes an opening that would be positioned across the LC layer 300 from the pixel electrodes 180 when the two mother substrates 110, 210 are combined. The light blocking layer 220 blocks light leaking from neighboring pixels, and is formed across the LC layer 300 from the thin film transistor 101 to prevent any external light from reaching the semiconductor layer 140 of the thin film transistor 101.

The light blocking layer 220 may include a metal material or a photoresist organic material added with a black pigment to block light. The black pigment may include carbon black or titanium oxide.

A color filter 230 which has red, green and blue colors is sequentially formed on the second mother substrate 210 having the light blocking layer 220. The colors of the color filter 230 are not limited to the three colors mentioned above or to being exactly three colors. The color filters 230 are adjacent to the second mother substrate 210 in FIG. 3, but this is not a limitation of the invention. For example, in some embodiments, the color filters 230 may be formed on the first mother substrate 110.

A planarization layer 250 is formed on the light blocking layer 220 and the color filters 230, which may be omitted.

A common electrode 280 is formed on the planarization layer 250. The common electrode 280 forms an electric field together with the pixel electrodes 180. The common electrode 280 includes a transparent conductive material such as indium tin oxide (ITO) or indium zinc oxide (IZO).

The liquid crystal layer 300 is provided between the common electrode 280 and the pixel electrodes 180. An alignment layer is respectively formed on the common electrode 280 and the pixel electrodes 180. The alignment layer (not shown) aligns liquid crystal molecules of the liquid crystal layer 300 in a predetermined direction.

Hereinafter, the configuration of the mother display panel 901 in the non-display region N will be described.

As in the display region D, the gate insulating layer 130 and the passivation layer 170 are formed on the first mother substrate 110 in the non-display region N. The gate insulating layer 130 and the passivation layer 170 are not necessary in the non-display region D, and may be omitted or removed if suitable. A circuit wire may be formed on the same layer as at least one of the gate wires 121 and 124 and the data wires 161, 165 and 166 in the non-display region N. The circuit wire includes a terminal to be electrically connected to an external device.

The cutting mark groups 510 are formed on the second mother substrate 210 on a surface close to the first mother substrate 110. The cutting mark groups 510 include the plurality of unit cutting marks 511 which is formed on the layer made of the same material as the light blocking layer 220. The planarization layer 250 and the common electrode 280 are formed on the light blocking layer 220 and the cutting mark groups 510. The planarization layer 250 and the common electrode 280 may be omitted as necessary.

The cutting mark groups 510 is of a convex-type. That is, the respective unit cutting marks 511 include the same material as the light blocking layer 220, and a periphery of the unit cutting marks 511 is open. Thus, the unit cutting marks 511 is dark while the surrounding area is bright.

As in the display region D, the alignment layer (not shown) may be formed between the first and second mother substrates 110 and 210 in the non-display region N.

The sealant 350 is formed between the first and second mother substrates 110 and 210. The sealant 350 seals the liquid crystal layer 300 formed on the display region D.

Then, the mother display panel 901 is cut into the plurality of display panels 910 and 920 based on the cutting mark groups 510. An electric field is formed between the pixel electrodes 180 and the common electrode 280 of the display panels 910 and 920 if the thin film transistor 101 as a switching element is turned on. The arrangement of the liquid crystal molecules in the liquid crystal layer 300 changes according to the electric field. Transmission of light through the liquid crystal layer 300 changes according to the arrangement of the liquid crystal molecules, thereby displaying a desired image on the display panels 910 and 920.

With such configuration, the mother display panel 901 may be divided into the plurality of display panels 910 and 920 having at least two different sizes more precisely and efficiently.

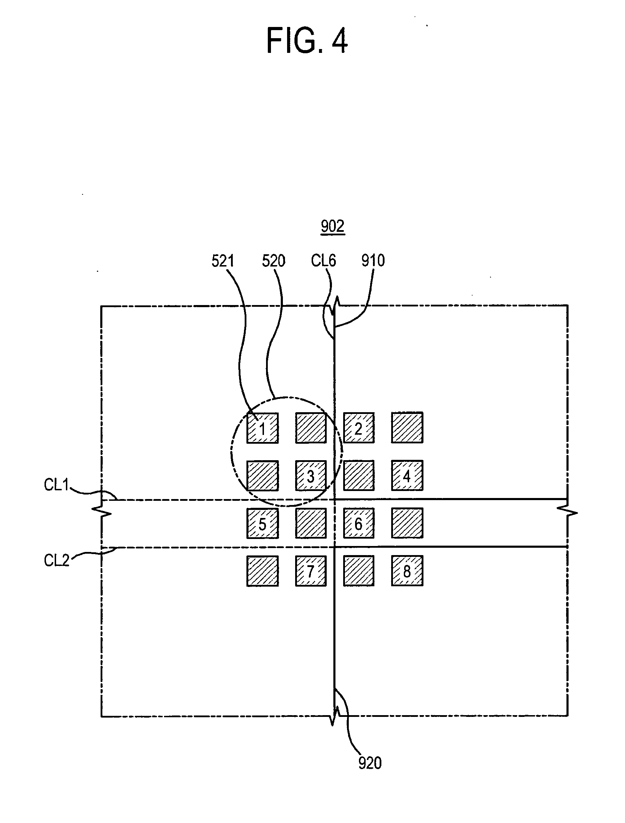

A mother display panel 902 according to a second exemplary embodiment of the present invention will be described with reference to FIG. 4.

As shown therein, a mother display panel 902 for manufacturing a display panel includes a plurality of cutting mark groups 520. The plurality of cutting mark groups 520 is formed in a matrix pattern, and serves as a reference for corners of a plurality of display panels 910 and 920. The respective cutting mark groups 520 include a plurality of unit cutting marks 521 which is spaced apart from each other.

At least some of the unit cutting marks 521 is marked with symbols so that individual unit cutting marks 521 can be identified. Here, the symbols may include characters, numerals and diagrams, as shown in FIG. 4.

With the foregoing configuration, the cutting mark groups 520 may be distinguished without difficulty if the mother display panel 902 is cut based on the cutting mark groups 520. Thus, the mother display panel 902 is easily divided into the plurality of display panels 910 and 920 having at least two different sizes.

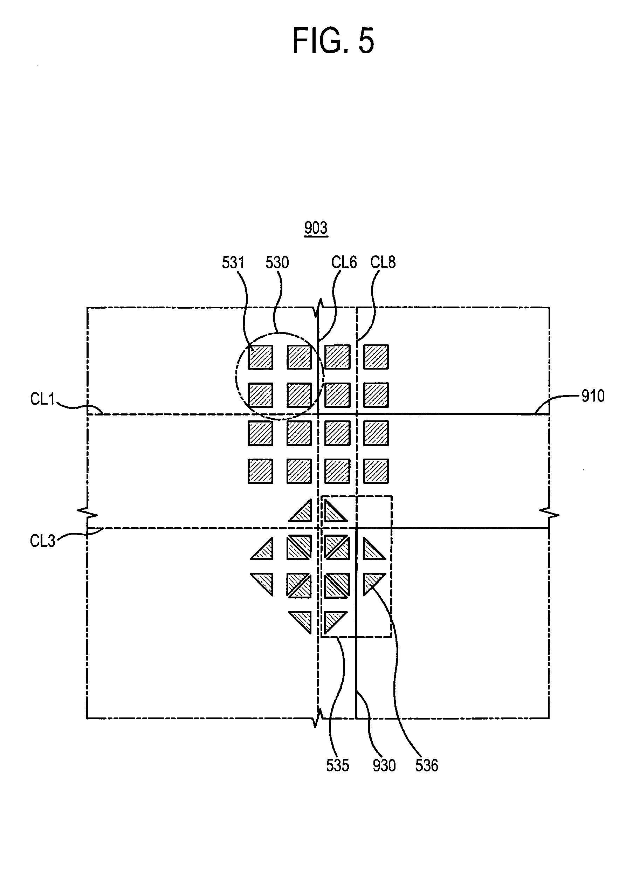

A mother display panel 903 according to a third exemplary embodiment of the present invention will be described with reference to FIG. 5.

As shown therein, a mother display panel 903 for manufacturing a display panel includes a plurality of cutting mark groups 530 and a plurality of auxiliary cutting mark groups 535.

The plurality of cutting mark groups 530 is formed in a matrix pattern, and serves as a reference for corners of a plurality of display panels 910 and 930 . The respective auxiliary cutting mark groups 535 are formed to be adjacent to the cutting mark groups 530 in at least one of vertical and transverse directions.

The respective cutting mark groups 530 include a plurality of unit cutting marks 531 which is spaced from each other. The respective auxiliary cutting mark groups 535 include a plurality of unit auxiliary cutting marks 536 which is spaced from each other. In the embodiment of FIG. 5, the unit cutting marks 531 and the unit auxiliary cutting marks 536 have different shapes from each other.

The auxiliary cutting mark groups 535 are spaced from the cutting mark groups 530 at an interval which ranges from about 1 µm to 300 µm.

As shown in FIG. 5, the first display panel 910 which has a reference size is cut along a first transverse cutting line CL1 and a first vertical cutting line CL6. The second display panel 930 which has shorter vertical and transverse lengths than the first display panel 910 is cut along a second transverse cutting line CL3 and a second vertical cutting line CL8.

Although not clearly illustrated in FIG. 5, the vertical length ("vertical" here meaning in reference to FIG. 5) of the second display panel 930 is significantly shorter than that of the first display panel 910. The auxiliary cutting mark groups 535 are spaced from the cutting mark groups 530 in a vertical direction. The mother display panel 903 is divided into the plurality of display panels 910 and 930 which are different in size, particularly in the vertical length, based on the cutting mark groups 530 and the auxiliary cutting mark groups 535.

However, the present invention is not limited to the foregoing process. For example, in some embodiments, the auxiliary cutting mark groups 535 may be spaced apart from the cutting mark groups 530 in a transverse direction ("transverse" in reference to FIG. 5). Such a method may be suitable when the second display panel 930 is cut out of the mother display panel 903 to have a smaller dimension in the transverse direction than the first display panel 910.

With the foregoing configuration, the mother display panel 903 is precisely and efficiently divided into the display panels 910 and 930 even if a size difference between the divided display panels 910 and 930 are relatively large. That is, the mother display panel 903 may be easily divided into the plurality of display panels 910 and 930 having different sizes by using the cutting mark groups 530 including the plurality of the unit cutting marks 531 and the auxiliary cutting mark groups 535 including the plurality of auxiliary unit cutting marks 536.

As the unit cutting marks 531 and the auxiliary unit cutting marks 536 have different shapes, a manufacturer may confirm whether the display panels 910 and 930 are precisely cut into the desired sizes based on the number and arrangement of the unit cutting marks 531 and the auxiliary unit cutting marks 536 remaining in the divided display panels 910 and 930.

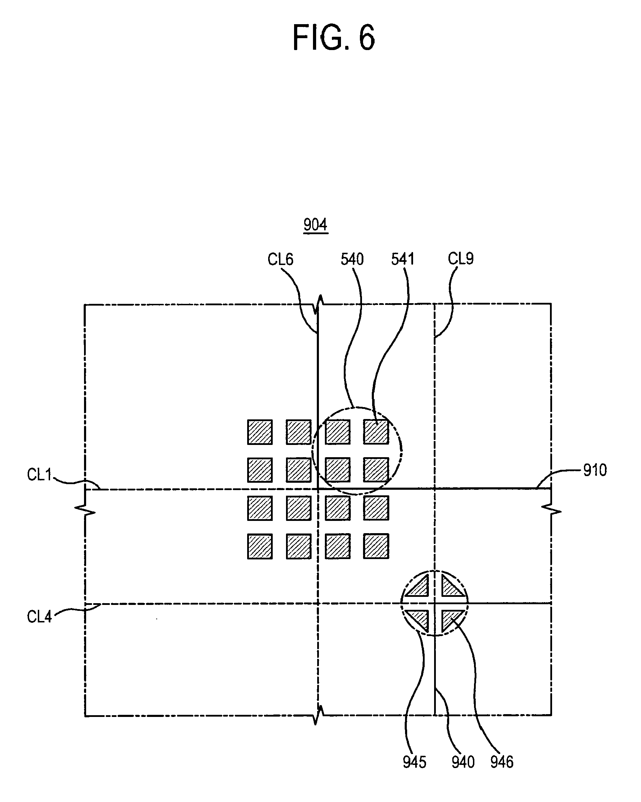

A mother display panel 904 according to a fourth exemplary embodiment of the present invention will be described with reference to FIG. 6.

As shown in FIG. 6, a mother display panel 904 for manufacturing a display panel includes a plurality of cutting mark groups 540 and a plurality of auxiliary cutting mark groups 945.

The plurality of cutting mark groups 540 is formed in a matrix pattern, and serves as a reference for corners of a plurality of display panels 910 and 940 upon cutting. The respective auxiliary cutting mark groups 945 are arranged in a diagonal direction to the cutting mark groups 540.

The respective cutting mark groups 540 include unit cutting marks 541 that are spaced apart from each other. The respective auxiliary cutting mark groups 945 include unit auxiliary cutting marks 946 that are spaced apart from each other. The unit cutting marks 541 and the unit auxiliary cutting marks 946 have different shapes from each other in the embodiment of FIG. 6.

The auxiliary cutting mark groups 945 are spaced apart from the cutting mark groups 540 by an interval of about 1 µm to 300 µm.

As shown in FIG. 6, the first display panel 910 which has a reference size is cut along a first transverse cutting line CL1 and a first vertical cutting line CL6. The second display panel 940 which is shorter than the first display panel 910 in both the vertical and transverse directions is cut along a second transverse cutting line CL4 and a second vertical cutting line CL9.

The vertical and transverse lengths of the second display panel 940 are shorter than that of the first display panel 910. The auxiliary cutting mark groups 945 are spaced from the cutting mark groups 540 in a diagonal direction.

With such a configuration, the mother display panel 904 is divided into the plurality of display panels 910 and 940 having different vertical and traverse lengths. That is, the mother display panel 904 may be precisely and efficiently divided into the display panels 910 and 940 even if they have significantly different vertical and traverse lengths.

The mother display panel 904 may be easily divided into the plurality of display panels 910 and 940 having different sizes by using the cutting mark groups 540 including the plurality of unit cutting marks 541 and the auxiliary cutting mark groups 945 including the plurality of auxiliary unit cutting marks 946.

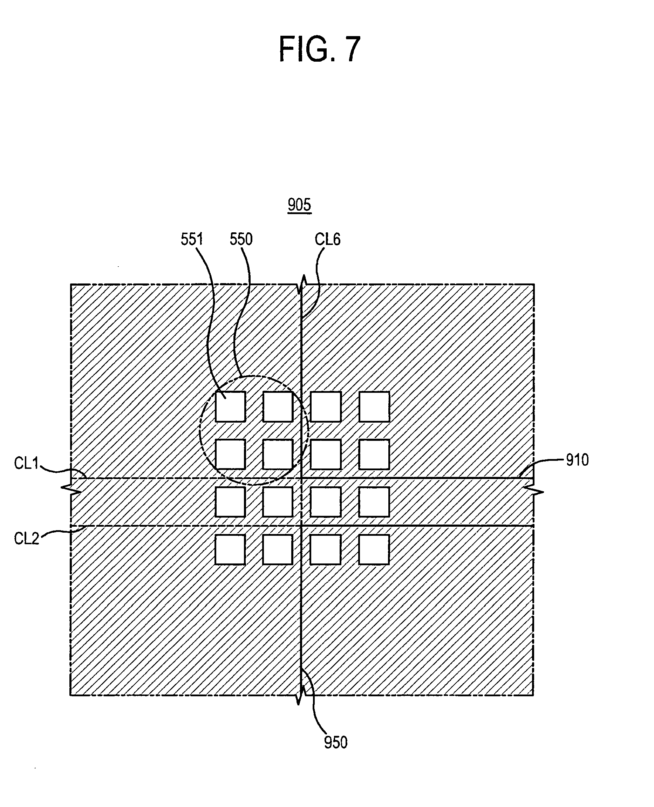

A mother display panel 905 according to a fifth exemplary embodiment of the present invention will be described with reference to FIG. 7.

As shown in FIG. 7, cutting mark groups 550 of this embodiment are of the concave-type. That is, the area around the unit cutting marks 551 is filled with the same material on the same layer as layers having colors among a light blocking layer 220 or a plurality of thin film layers disposed between the first and second mother substrates 110 and 210 (refer to FIG. 3). The unit cutting marks 551 are open. Thus, the unit cutting marks 551 is bright while the area around it is dark.

With the foregoing configuration, the mother display panel 905 may be easily divided into a plurality of display panels 910 and 950 having different sizes, using the cutting mark groups 550 including the plurality of unit cutting marks 551.

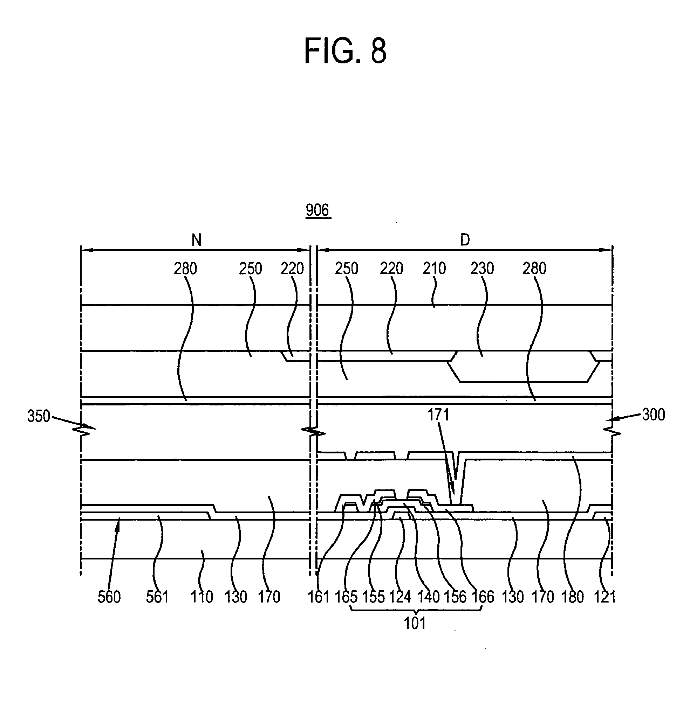

A mother display panel 906 according to a sixth exemplary embodiment of the present invention will be described with reference to FIG. 8.

As shown in FIG. 8, cutting mark groups 560 are formed on the same layer as the gate wires 121, 124 with the same material as the gate wires 121 and 124. That is, unit cutting marks 561 of the cutting mark groups 560 are formed together with the gate wires 121 and 124.

The cutting mark groups 560 may be of the convex-type or the concave-type.

With such configuration, the mother display panel 906 is divided into a plurality of display panels having different sizes by using the cutting mark groups 560 including the plurality of unit cutting marks 561.

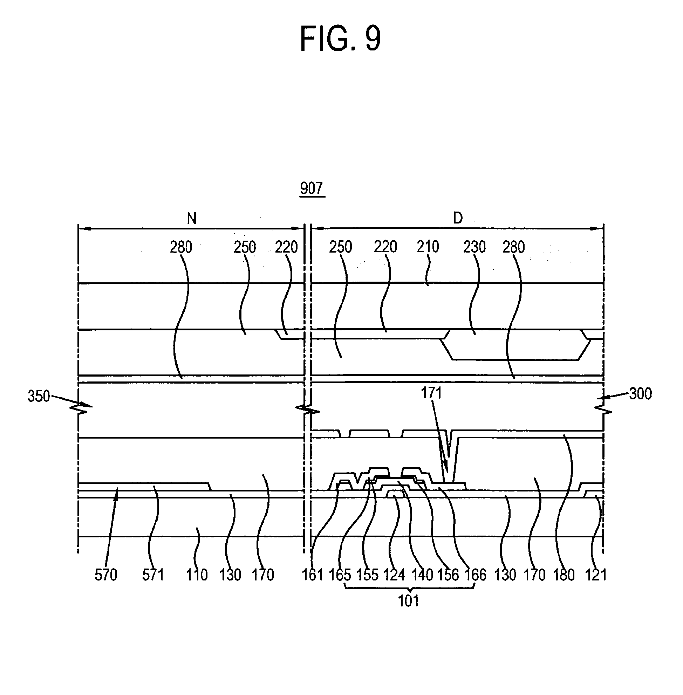

A mother display panel 907 according to a seventh exemplary embodiment of the present invention will be described with reference to FIG. 9.

As shown in FIG. 9, cutting mark groups 570 are formed on the same layer as the data wires 161, 165 and 166 with same material as the data wires 161, 165 and 166. That is, unit cutting marks 571 of the cutting mark groups 570 are formed together with the data wires 161, 165 and 166.

The cutting mark groups 570 may be of the convex-type or the concave-type.

With such configuration, the mother display panel 907 is divided into a plurality of display panels having different sizes by using the cutting mark groups 570 including the plurality of unit cutting marks 571.

According to a manufacturing method of the mother display panel 907, a layer that is made of the same material as the semiconductor layer 140 and the ohmic contact members 155 and 156 may remain below the cutting mark groups 570.

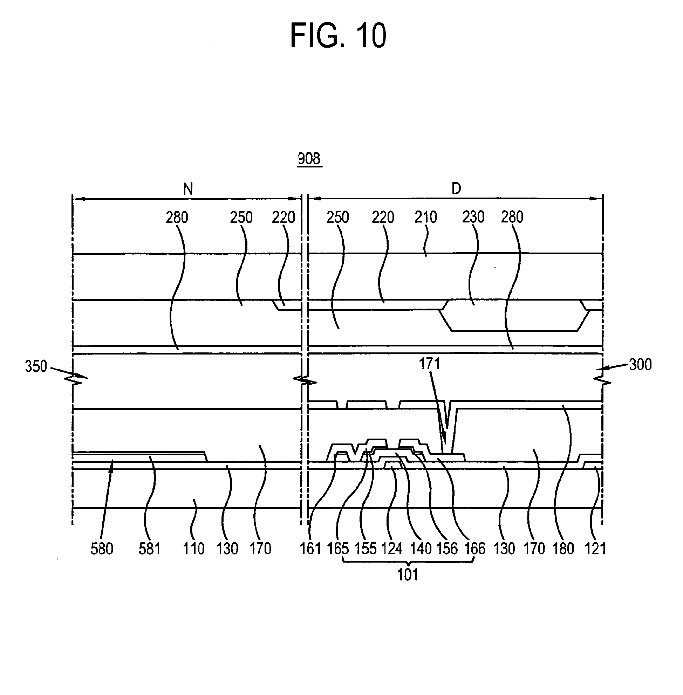

A mother display panel 908 according to an eighth exemplary embodiment of the present invention will be described with reference to FIG. 10.

As shown in FIG. 10, cutting mark groups 580 are formed on the same layer as the semiconductor layer 140 with same material as a semiconductor layer 140, which includes amorphous silicon. Here, the semiconductor layer 140 is colored.

That is, the cutting marks 580 having a plurality of unit cutting marks 581 are formed at the same time as the semiconductor layer 140. The cutting mark groups 580 may be convex or concave.

With such configuration, the mother display panel 908 may be easily divided into a plurality of display panels having different sizes by using the cutting mark groups 580 including the plurality of unit cutting marks 581.

The cutting mark groups 580 may be made of the same material as the ohmic contact members 155 and 156 together with the same material as the semiconductor layer 140 in consideration of a manufacturing process.

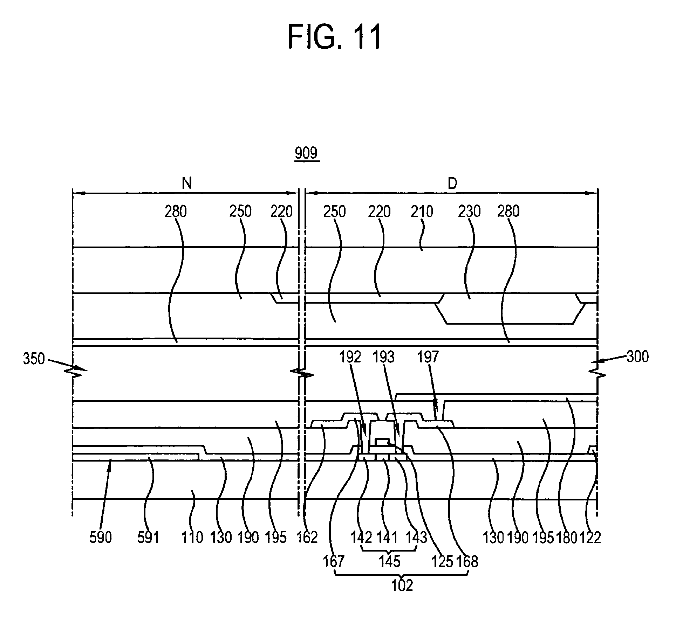

A mother display panel 909 according to a ninth exemplary embodiment of the present invention will be described with reference to FIG. 11.

As shown in FIG. 11, a mother display panel 909 for manufacturing a display panel includes a semiconductor layer 145 including poly silicon. That is, the mother display panel 909 includes a low temperature poly silicon thin film transistor 102.

The configuration of the mother display panel 909 including the low temperature poly silicon thin film transistor 102 is as follow.

First, the configuration of the mother display panel 909 in a display region D will be described.

The first mother substrate 110 includes a transparent material such as glass, quartz, ceramic or plastic.

The semiconductor layer 145 is formed on the first mother substrate 110. The semiconductor 145 includes poly silicon. An amorphous silicon layer is formed on the first mother substrate 110, then patterned and crystallized to form the semiconductor layer 145. The semiconductor layer 145 includes a channel region 141 which is not doped with a dopant, and a source region 142 and a drain region 143 which are formed along the channel region and are p+ doped. The doped ion includes a p-type dopant such as boron (B) and the source gas for boron is mainly B₂H₆. The dopant may vary depending on the type of the thin film transistor 102. That is, an n-type dopant may be used instead. Also, the semiconductor layer 145 is colored.

A buffer layer (not shown) may be formed between the first mother substrate 110 and the semiconductor layer 145. The buffer layer prevents an impurity in the first mother substrate 110 from infiltrating the semiconductor layer 145, and provides a planar surface. The buffer layer may include any of various materials to serve this function. The buffer layer may be adopted or removed as deemed suitable depending on the type of the first mother substrate 110 and process conditions.

A gate insulating layer 130 including silicon oxide or silicon nitride is formed on the semiconductor layer 145. Gate wires 122 and 125 which include a gate line 122 and a gate electrode 125 is formed on the gate insulating layer 130. The gate wires 122 and 125 may further include a first storage electrode and other lines (not shown). The gate electrode 125 overlaps at least a part of the semiconductor layer 145, particularly the channel region 141.

An intermediate insulating layer 190 is formed on the gate insulating layer 130 to cover the gate wires 122 and 125. The gate insulating layer 130 and the intermediate insulating layer 190 are formed with contact holes 192 and 193 that extend to the source region 142 and the drain region 143 of the semiconductor layer 145, respectively. The contact holes 192 and 193 include a first contact hole 192 that extends to the source region 142 and a second contact hole 193 that extends to the drain region 143.

Data wires 162, 167 and 168 which include a data line 162, a source electrode 167 and a drain electrode 168 are formed on the intermediate insulating layer 190. The data wires 162, 167 and 168 may further include a second storage electrode and other lines (not shown). The source electrode 167 and the drain electrode 168 are respectively connected with the source region 142 and the drain region 143 of the semiconductor layer 145 through the contact holes 192 and 193.

The gate wires 122 and 125 and the data wires 162, 167 and 168 are not limited to the foregoing configuration. For example, the configuration of the gate wires 122 and 125 and the data wires 162, 167 and 168 may change depending on the configuration of the thin film transistor 102 and other circuit wires. That is, the gate line 122, the data line 162, etc. may be formed on different layers than in the exemplary embodiment.

In the manner described above, the thin film transistor 102 including the semiconductor layer 145, the gate electrode 125, the source electrode 167 and the drain electrode 168 is formed.

An organic layer 195 is formed on the intermediate insulating layer 190 to cover the data wires 162, 167 and 168. The organic layer 195 covers an uneven surface and provides a planar surface. The organic layer 195 includes a contact hole 197 that extends to a part of the drain electrode 168. Hereinafter, the contact hole 197 exposing the part of the drain electrode 168 will be referred to as a third contact hole 197.

The organic layer 195 includes a material which has a high planarization property. The organic layer 195 may prevent errors such as disconnection and short-circuiting of a conductive layer to be formed on the organic layer 195. Also, the organic layer 195 may prevent an unnecessary electric field from being formed between the pixel electrodes 180 formed on the organic layer 195, and several conductive layers formed below the organic layer 195. The pixel electrodes 180 formed on the organic layer 195 is connected to the drain electrode 168 through the third contact hole 197.

The organic layer 195 may be omitted depending on the manufacturing method of the mother display panel 909. If the organic layer 195 is omitted, the pixel electrodes 180 may be formed on the same layer as the drain electrode 168.

Hereinafter, a configuration of the mother display panel 909 in a non-display region N will be described.

As in the display region D, the gate insulating layer 130, the intermediate insulating layer 190 and the organic layer 195 are formed on the first mother substrate 110 in the non-display region N. The gate insulating layer 130, the intermediate insulating layer 190 and the organic layer 195 are not necessary in the non-display region N, and may be omitted or removed if desired and appropriate. The circuit wire may be formed on the same layer as one of the gate wires 122 and 125 and the data wires 162, 167 and 168. The circuit wire includes a terminal that can be electrically connected to an external device.

Cutting mark groups 590 are formed on the same layer as the semiconductor layer 145 with the same material as the semiconductor layer 145, which includes poly silicon. The semiconductor layer 145 is colored.

In more detail, when the semiconductor layer 140 is formed on the first mother substrate 110, a layer containing the same material as the semiconductor layer 145 is patterned to form the cutting mark groups 590 having a plurality of unit cutting marks 591 in the non-display region N. The cutting mark groups 590 may be of the convex-type or the concave-type.

With such configuration, the mother display panel 909 may be easily divided into a plurality of display panels having different sizes by using the cutting mark groups 590 including the plurality of unit cutting marks 591.

As described above, the present invention provides a mother display panel for manufacturing display panels having at least two different sizes more precisely and efficiently.

That is, the mother display panel may be easily divided into the plurality of display panels having different sizes with the use of cutting mark groups including a plurality of unit cutting marks.

Also, the cutting mark groups of the invention are easily distinguishable, making it easier to divide the mother display panel based on the cutting mark groups.

With the invention, the mother display panel may be precisely and efficiently divided into the desired display panels even if the desired display panels vary significantly in size. For example, the mother display panel may be easily divided into the plurality of display panels having different sizes by implementing cutting mark groups that include a plurality of unit cutting marks and auxiliary cutting mark groups including a plurality of auxiliary unit cutting marks.

Although a few embodiments of the present invention have been shown and described, it will be appreciated by those skilled in the art that changes may be made to these exemplary embodiments without departing from the principles and spirit of the invention, the scope of which is defined in the appended claims and their equivalents.

## Claims

1. A mother display panel that is to be divided into a plurality of display panels, the mother display panel comprising:
a plurality of cutting mark groups arranged in a matrix pattern to serve as a position reference for corners of the plurality of display panels, the respective cutting mark groups comprising unit cutting marks that are spaced apart from each other.

2. The mother display panel according to claim 1, wherein the plurality of display panels has at least two different sizes.

3. The mother display panel according to claim 2, wherein the unit cutting marks have an average width ranging from about 1 µm to about 100 µm.

4. The mother display panel according to claim 3, wherein the unit cutting marks are spaced apart from each other by a distance ranging from about 1 µm to about 100 µm.

5. The mother display panel according to claim 4, wherein at least some of the unit cutting marks have a symbol formed thereon to identify itself.

6. The mother display panel according to claim 4, further comprising an auxiliary cutting mark group which includes unit auxiliary cutting marks and is located at a predetermined position relative to the cutting mark groups, wherein the plurality of unit auxiliary cutting marks have a different shape than the unit cutting marks.

7. The mother display panel according to claim 6, wherein the auxiliary cutting mark group is adjacent to the cutting mark groups in at least one of a vertical direction and a transverse direction.

8. The mother display panel according to claim 6, wherein the auxiliary cutting mark group is adjacent to the cutting mark groups in a diagonal direction.

9. The mother display panel according to claim 6, wherein the auxiliary cutting mark group is spaced apart from the cutting mark groups by a distance ranging from about 1 µm to about 300µm.

10. The mother display panel according to claim 4, wherein the cutting mark groups are of a convex-type.

11. The mother display panel according to claim 4, wherein the cutting mark groups are of a concave-type.

12. The mother display panel according to claim 1, further comprising:
a first mother substrate;
a second mother substrate; and
a plurality of thin film layers formed between the first and second mother substrates.

13. The mother display panel according to claim 12, wherein the plurality of thin film layers comprises a light blocking layer, and the cutting mark groups are formed on the same layer as the light blocking layer using the same material as the light blocking layer.

14. The mother display panel according to claim 12, wherein the plurality of thin film layers comprises gate wires and the cutting mark groups are formed on the same layer as the gate wires using the same material as the gate wires.

15. The mother display panel according to claim 12, wherein the plurality of thin film layers comprises data wires, and the cutting mark groups are formed on the same layer as the data wires using the same material as the data wires.

16. The mother display panel according to claim 12, wherein the plurality of thin film layers comprises a semiconductor layer which includes amorphous silicon, and the cutting mark groups are formed on the same layer as the semiconductor layer using the same material as the semiconductor layer.

17. The mother display panel according to claim 12, wherein the plurality of thin film layers comprises a semiconductor layer which includes poly silicon, and the cutting mark groups are formed on the same layer as the semiconductor layer using the same material as the semiconductor layer.
